# EUROPEAN PATENT APPLICATION

(11) **EP 1 146 450 A1**
(43) Date of publication of application: **17.10.2001**
(21) Application number: 01103941.9
(22) Date of filing: 19.02.2001
(51) Int. Cl.: G06F 17/60

(54) **Match-making in electronic trading systems**

(30) Priority: 14.04.2000 EP 00810327
(71) Applicant: International Business Machines Corporation, Armonk, NY 10504 (US)
(72) Inventor: Facciorusso, Christian, 8134 Adliswil (CH); Field, Simon, 8134 Adliswil (CH); Hoffner, Yigal, 8041 Zürich (CH); Schade, Andreas, 8134 Adliswil (CH)
(74) Representative: Klett, Peter Michael

(57) **Abstract**

Methods are provided for determining, in a trader device (2) of an electronic trading system (1), whether a match exists between a client requirement, provided by a client device (5) of the system, and a supplier offer stored in said trader device (2). The supplier offer comprises feature data (P), indicative of a set of features of an offered product, including at least one updatable feature data element (P_{D}). The updatable feature data element (P_{D}) is indicative of a variable feature of the offered product and includes address data indicative of a location from which a current specification of the variable feature can be obtained by the trader device (2) in response to an update request from the trader device (2). The method comprises:
a) receiving from the client device (5) a client requirement comprising constraint data (CST), indicative of a set of required product features, and at least one updatable feature data element (P_{D}), indicative of a variable required product feature, which includes address data indicative of a location from which a current specification of the variable feature can be obtained by the trader device (2) in response to an update request from the trader device; b) comparing the constraint data (CST) and the feature data (P); c) repeatedly issuing update requests to obtain current specifications for said updatable feature data elements (P_{D}) of the supplier offer and the client requirement and determining whether a negotiation success condition, dependent on said current specifications, is satisfied, until said negotiation success condition or a negotiation termination condition is satisfied; and d) determining that a match exists between the client requirement and the supplier offer if said feature data (P) corresponds to said constraint data (CST) and said negotiation success condition is satisfied. Methods embodying the invention provide for structured negotiations as part of the match-making process.

## Description

This invention relates generally to electronic trading systems, and more particularly to match-making the needs of clients with goods and services offered by suppliers in such systems.

In electronic trading systems, suppliers advertise their products in some virtual offer space, for example on the Internet, and potential clients can "shop" for products by accessing this offer space to search for products which meet their requirements. For example, a supplier may advertise its goods or services (referred to generally herein as "products") in electronic Yellow-Pages, and potential clients can search this virtual directory for the products they require. The process of searching can be assisted by a match-making facility (MMF) provided by the trader device, such as an Internet server, which provides access to the virtual offer space. The MMF allows clients to input data indicating their requirements, and then searches the product details to identify products which match those requirements. Details of the matching products can then be presented to the client for assessment.

An example of an MMF is provided by the OMG (Object Management Group) CORBA (Common Object Request Broker Architecture) trading service. CORBA is described, for example, in [OMG 95] "The Common Object Request Broker: Architecture and Specification", document Number 91.12.1, Object Management group and X/Open, 1992. The trading service in particular is described in [OMG 96] RFP5 Submission: "CORBA Trading Object Service", Document orbos/96-05-06, May 10, Object Management group and X/Open, 1996. In this trading service, a supplier (or "exporter") sends the MMF (or "trader") a description of the offered product, and this is stored by the trader together with product descriptions from other suppliers. The product description sent by a supplier is defined by a set of data elements, or "properties", each of which defines a particular feature of the offered product. To use the service, a client (or "importer") sends the trader a constraint expression which defines the required product features and is used by the trader to constrain the search for matching products. To allow for the fact that certain product features may be variable, so that the feature cannot be fully specified when an exporter initially supplies a product description for advertisement, the trader recognizes a form of updatable data element which can be used by an exporter for a variable feature in its product description. These updatable feature data elements include address data which defines a location from which a current specification of the feature can be obtained by the trader when required for the match-making process. The updatable feature data elements in this system are known as "dynamic properties", and the address data here is an interface to a so-called "dynamic property evaluator" which is nominated by the exporter to provide a current specification of the feature in question in response to an evaluation request from the trader. Thus, on receipt of constraint data from an importer, the trader compares the properties of the various stored product descriptions with the required product features indicated by the constraint data. When a dynamic property is identified, the trader issues a request to the specified dynamic property evaluator to obtain a current specification of the feature in question for checking against the constraint. If the properties of a particular product description match the constraints specified by the importer, then the trader can supply the importer with an interface to the exporter offering the matching product, so that the importer and exporter can then interact directly.

In the CORBA trading service described above, the match-making is a one-way process in which a match is identified based on comparison of constraint data supplied by clients with feature data describing products offered by suppliers. Our copending European patent application number 98124191.2 discloses match-making systems in which the match-making process is bi-directional. Here, a supplier can also specify constraints to be applied to potential clients, and clients can provide information about themselves for assessment against a supplier's constraints. In an embodiment based on the CORBA trading service therefore, a client supplies properties, defining features offered by the client, in addition to the client constraint data, and a supplier provides the usual list of properties defining offered product features together with constraint data defining features required of a client. The match-making process involves comparing both the supplier's properties with the client constraint data and the client properties with the supplier's constraint data, and a match is identified if the features offered by each party meet the constraints specified by the other party.

While the above systems enable basic match-making processes to be implemented in electronic trading systems, it would be desirable for such systems to provide a more comprehensive substitute for real trading situations.

According to a first aspect of the present invention there is provided a method for determining, in a trader device of an electronic trading system, whether a match exists between a client requirement, provided by a client device of the system, and a supplier offer stored in said trader device, the supplier offer comprising feature data, indicative of a set of features of an offered product, including at least one updatable feature data element which is indicative of a variable feature of the offered product and includes address data indicative of a location from which a current specification of the variable feature can be obtained by the trader device in response to an update request from the trader device, the method comprising:
a) receiving from the client device a client requirement comprising constraint data, indicative of a set of required product features, and at least one updatable feature data element, indicative of a variable required product feature, which includes address data indicative of a location from which a current specification of the variable feature can be obtained by the trader device in response to an update request from the trader device;
b) comparing the constraint data and the feature data;
c) repeatedly issuing update requests to obtain current specifications for said updatable feature data elements of the supplier offer and the client requirement and determining whether a negotiation success condition, dependent on said current specifications, is satisfied, until said negotiation success condition or a negotiation termination condition is satisfied; and
d) determining that a match exists between the client requirement and the supplier offer if said feature data corresponds to said constraint data and said negotiation success condition is satisfied.

Embodiments of the present invention thus provide a match-making process in which supplier offers can be matched to client requirements as before, but in which updatable feature data elements are provided by both parties and current specifications for the features in question can be obtained repeatedly by the trader device so that a condition dependent on these current specifications can be evaluated as part of the match-making process. By providing for repeated updates of updatable feature data elements in this way, the updatable feature data elements can be exploited to enable a client and supplier to successively modify the required and offered features, thus providing a mechanism for conducting structured negotiations between the parties as part of the match-making process. Thus, embodiments of the invention provide an elegantly simple and efficient process for supporting negotiation in the match-making operation.

In general, the feature data of a supplier offer may be indicative of a set of one or more features of an offered product, and may comprise feature data elements for respective features, for example in the form of properties as defined by the CORBA trading service. In such a case, the updatable feature data elements of the supplier offer and client requirement can be dynamic properties as discussed above. Similarly, the constraint data of a client requirement may be indicative of a set of one or more required product features, and may be, for example, a constraint expression presented in the standard constraint language defined by the CORBA trading service. In general, however, embodiments of the invention may utilize any convenient data formats for the constraint data, feature data and updatable feature data elements.

Where only the client requirement includes constraint data for comparison with the feature data of a supplier offer, then it may be determined that a match exists simply if (1) the feature data from the supplier corresponds to the constraint data from the client, and (2) the negotiation success condition is satisfied, no other conditions being relevant for assessing the match in this case. However, the process can allow for bi-directional match-making, where the supplier offer also includes constraint data, indicative of a set of required client features, and the client requirement also includes feature data, indicative of a set of offered client features. Here, step (b) above can involve comparing the constraint data of the client requirement with the feature data of the supplier offer, and also comparing the constraint data of the supplier offer with the feature data of the client requirement. In this case, in step (d) above, it may be determined that a match exists if the negotiation success condition is satisfied and the feature data of the supplier offer and client requirement corresponds to the constraint data of the client requirement and supplier offer respectively. In either case, the degree to which the feature data of one party must correspond to the constraint data of the other party in order to establish a match can be determined by system settings and may vary for different applications. For example, in some cases the correspondence must amount to an exact match between the offered features and the specified constraints, whereas in other cases an approximate match may be sufficient for the required correspondence to be established. For example, depending on the nature of the application it may be sufficient that most of the constraints are satisfied, or that offered features are within a particular range of features required by the constraints.

In general, both the supplier offer and client requirement may include one or more updatable feature data elements, and the negotiation success condition may be dependent on all, or only a subset, of these. In particular, while the features on which the parties are prepared to negotiate may be defined by updatable feature data elements, other, non-negotiable features may also be defined by updatable feature data elements where the features are variable and cannot be fully specified until the time of match-making. The trader device can determine the relevant features for the negotiation process of step (c) above in various ways in embodiments of the invention. For example, the trader device may simply perform the negotiation process of step (c) for any updatable feature data elements on which the negotiation success condition is dependent. Here the negotiable features, for which repeated updates should be sought, are identified from the success condition, and for any other features defined by updatable feature data elements a single update request will be issued to obtain the current specification for use in the match-making process in the usual way. In other embodiments, the negotiable features may be specifically identified to the trader device. For example, updatable feature data elements defining negotiable features may be distinguished from those defining non-negotiable features by a flag, marker or other identifier in the data element format. Alternatively, the negotiable features may be predetermined in the trader device. For example, the trader device may be dedicated to an application in which specified features, known to all parties, are negotiable, or the negotiable features may be defined by a negotiation protocol to be used in a particular match-making process and on which both parties have agreed, eg. by specifying the protocol as part of the client requirement and supplier offer respectively. Clearly, however, it is desirable for repeated update requests to be issued only for those updatable feature data elements on which the negotiation success condition is dependent.

The negotiation success condition itself may be specified in various ways in embodiments of the invention. In some embodiments the success condition may be defined by the constraint data. For example, one or other of the client and supplier constraint data may include the success condition. The success condition may be identified as such to the trader device by inclusion of a flag, marker or other identifier to distinguish the success condition from other constraints if required, for example where the negotiable features are not otherwise identified to the trader as discussed above. Alternatively, the trader may simply assume that any constraint which links one or more updatable feature data elements from both sides constitutes a negotiation success condition for the purposes of step (c), and issue repeated update requests in step (c) for the particular updatable feature data elements linked by this condition. Further, where both parties supply a constraint linking client and supplier updatable feature data elements, both constraints may be included in the success condition by the trader device, though clearly there must be some overlap for a successful conclusion to be achievable. In other embodiments, the negotiation success condition may be predetermined in the trader device, for example where a particular negotiation protocol is adopted as discussed above in which case the success condition may be specified by the protocol.

The negotiation termination condition could similarly be specified in the constraint data in some embodiments, but it will generally be more convenient for this termination condition to be predetermined in the trader device, for example as a specified number of negotiation cycles in step (c) above, or failure of both parties to modify the current specifications of the negotiable features in an update cycle. In this case, the condition may be predetermined independently of the parties, or may be defined by a negotiation protocol specified by the parties as discussed above.

The order in which steps (b) and (c) above are performed can be varied in different implementations. For example, where the negotiation success condition is defined independently of the constraint data, or is distinguished from other constraints by the trader device, it is preferred that step (b) is performed prior to step (c) so that the negotiation process need only be performed if all constraints (or all those other than the success condition) are met by the other party's feature data. Alternatively for example, where the success condition is treated as any other constraint in the constraint data, then step (c) may be performed whenever the particular constraint defining the success condition is evaluated during the comparison process of step (b).

Some embodiments of the invention may allow for initial, default values of the negotiable features to be provided in the updatable feature data elements supplied by the parties. In this case, these default values can be used for the first evaluation of the success condition, repeated requests for new current specifications of these features in accordance with step (c) then only being performed if the default values do not satisfy the success condition. Further, embodiments may provide for inclusion of the most recent current specification of a negotiable feature by one party in an update request sent to the other party, so that each party then knows the other party's current position at each stage of the negotiation process. Where initial default values are provided for negotiable features, all update requests in step (c) can include a current specification from the other party, and in other cases at least the update requests for the second and subsequent current specifications for a negotiable feature can include the most recent current specification of the other party.

A second aspect of the present invention provides a trader device of an electronic trading system for determining whether a match exists between a client requirement, provided by a client device of the system, and a supplier offer stored in the trader device, the supplier offer comprising feature data, indicative of a set of features of an offered product, including at least one updatable feature data element which is indicative of a variable feature of the offered product and includes address data indicative of a location from which a current specification of the variable feature can be obtained by the trader device in response to an update request from the trader device, the trader device comprising memory for storing the supplier offer, communication means for transmission and reception of data by the trader device, and control logic, responsive to receipt by the trader device of a client requirement which comprises constraint data, indicative of a set of required product features, and at least one updatable feature data element, indicative of a variable required product feature, which includes address data indicative of a location from which a current specification of the variable feature can be obtained by the trader device in response to an update request from the trader device, to:
compare said constraint data and said feature data; and
repeatedly issue update requests via said communication means to obtain current specifications for said updatable feature data elements of the supplier offer and the client requirement and determine whether a negotiation success condition, dependent on said current specifications, is satisfied, until said negotiation success condition or a negotiation termination condition is satisfied;
wherein the control logic is configured to determine that a match exists between the client requirement and the supplier offer if said feature data corresponds to said constraint data and said negotiation success condition is satisfied.

A third aspect of the present invention provides an electronic trading system comprising:
a trader device according to the second aspect of the invention;
a supplier device for transmitting a supplier offer to the trader device, the supplier offer comprising feature data, indicative of a set of features of an offered product, including at least one updatable feature data element which is indicative of a variable feature of the offered product and includes address data indicative of a location from which a current specification of the variable feature can be obtained by the trader device in response to an update request from the trader device;
supplier feature update means, responsive to an update request issued by the trader device to the location indicated by said updatable feature data element of the supplier offer, to supply a current specification for the feature data element to the trader device;
a client device for transmitting a client requirement to the trader device, the client requirement comprising constraint data, indicative of a set of required product features, and at least one updatable feature data element, indicative of a variable required product feature, which includes address data indicative of a location from which a current specification of the variable feature can be obtained by the trader device in response to an update request from the trader device, and
client feature update means, responsive to an update request issued by the trader device to the location indicated by said updatable feature data element of the client requirement, to supply a current specification for the feature data element to the trader device.

A further aspect of the invention provides a computer program element comprising computer program code means which, when loaded in a processor of a trading device of an electronic trading system, configures the processor to perform a method according to the first aspect of the invention.

It is to be understood that, in general, where features are described herein with reference to a method embodying the invention, corresponding features may be provided in accordance with apparatus embodying the invention, and vice versa.

Preferred embodiments of the invention will now be described, by way of example, with reference to the accompanying drawings in which:
Figure 1 is a schematic illustration of an electronic trading system embodying the invention;
Figure 2 is a schematic block diagram of a trader device for implementing match-making methods embodying the invention;
Figure 3 is a flow chart illustrating one example of a match-making method implemented by the trader device in an embodiment of the invention;
Figure 4 illustrates a particular example of the negotiation process in the match-making method of Figure 3;
Figure 5 is a flow chart illustrating another example of a match-making method implemented by the trader device in an embodiment of the invention; and
Figure 6 illustrates a particular example of the negotiation process in the match-making method of Figure 5.

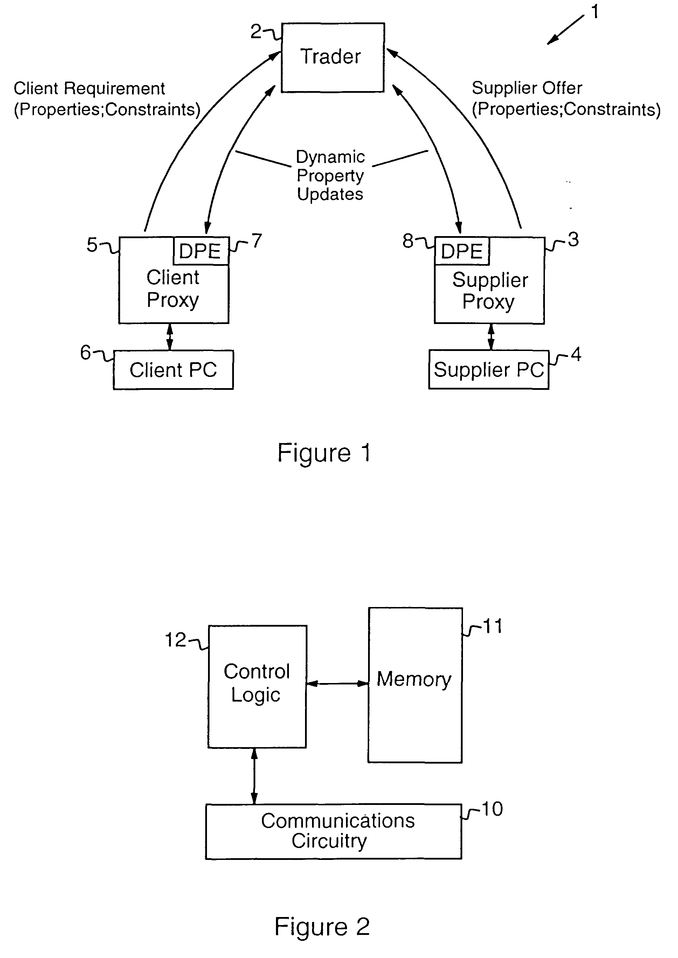

Figure 1 shows an embodiment of an electronic trading system 1. The system includes a trader device 2 which provides the match-making facility described in detail below, and may be embodied, for example, in a server which provides external access to the match-making facility via the Internet. The system 1 also includes a supplier device in the form of supplier proxy 2 which may be, for example, a PC or server which is connectable to the Internet and via which a supplier can access the trader device 2 to advertise a product. In this embodiment, it is assumed that the supplier proxy 3 is a server with which the supplier communicates by means of a supplier PC 4. In this scenario, the supplier proxy may be a supplier-owned device, or a device managed by an independent service provider who may represent a number of suppliers in the interactions with trader device 2 . The system 1 further includes a client device, in the form of client proxy 5 in this embodiment, via which a client can access trader device 2 to search for a required product. Again, for the purposes of this example it is assumed that client proxy 5 is a server, client-owned or independent, which provides Internet access to trader device 2 and with which the client communicates by means of client PC 6. Of course, in other embodiments the functions of client proxy 5 and client PC 6 could simply be provided by a single client PC, and similarly for supplier proxy 3 and supplier PC 4.

In operation of the trading system, a supplier notifies supplier proxy 3 that it wishes to advertise a product. Based on information input by the supplier, via PC 4 in this example, supplier proxy 3 formulates a supplier offer which is forwarded to trader device 2 where the offer is stored together with product offers from other suppliers. In the present embodiment, the implementation is based on the CORBA trading service, so the supplier offer includes feature data consisting of feature data elements in the form properties as defined in this trading service, defining features of the offered product. The properties are <name, value> pairs each specifying a type (name) and specification (value) for a particular feature. Similarly, when the client wishes to search for a product it notifies client proxy 5. Based on information input by the client, via client PC 5 in this example, client proxy 5 formulates a client requirement which is forwarded to trader device 2. The client requirement includes constraint data defining the required product features, in this case by means of constraint expressions (herein referred to simply as "constraints") in the standard constraint language of the CORBA trading service specification.

As indicated in the figure and in contrast to the CORBA trading service, the client requirement may also include feature data descriptive of the client, here in the form of properties defining offered client features in the same manner as the properties specified in the supplier offer. Similarly, the supplier offer may also include constraint data specifying required client features, here as constraints in the standard CORBA constraint language. In addition, both the client requirement and supplier offer include at least one updatable feature data element which specifies a variable feature on which the party is prepared to negotiate. Since current specifications (values) of these features must be provided during the match-making process as discussed further below, these updatable feature data elements include address data specifying a location from which a current specification of the feature can be obtained when required In this embodiment, these updatable feature data elements are in the form of dynamic properties as defined by the CORBA trading service, wherein the address data is an interface to a "dynamic property evaluator" (DPE) from which a current specification of the relevant feature can be obtained on-demand. Thus, as illustrated in Figure 1, the client proxy 5 includes client feature update means in the form of DPE 7, and the supplier proxy 3 includes supplier feature update means in the form of DPE 8. Dynamic properties of the client requirement and supplier offer will specify the appropriate DPE 7 and 8 respectively. Each DPE is essentially a program which is responsive to an update request, or "evaluation request", from the trader device to return a current value for the dynamic property identified in the request. Each DPE may be operative to determine the current value automatically, eg. based on information obtained, dynamically or in advance, from the supplier/client as appropriate, or the DPE may be operative to request the current value from a person if the system allows for the delays inherent in such a process. For example, the DPE 7 may forward a request to client PC 6 for the current value to be input by an operator. Similarly, the DPE 8 may alert a representative of the supplier, eg. via supplier PC 4, to input the required current value. Thus, the DPE's 7, 8 can be implemented in various ways, and suitable implementations will be apparent to those skilled in the art from the description herein. Further, while the DPE's 7 and 8 are provided in the client and supplier proxies in this embodiment, this is not essential, and the DPE's could be provided independently, at different locations to the proxies, if desired.

The trader device 2 performs match-making of client requirements and supplier offers. Figure 2 is a schematic illustration of the main elements of trader device 2 which are involved in the match-making process. As illustrated, the device comprises communications circuitry 10 for transmitting and receiving data to and from supplier and client devices, a memory 11 for storing supplier offers received from supplier devices, and control logic 12 configured to implement the match-making process between a received client requirement and the stored supplier offers. In general, the control logic 12 may be implemented in hardware or software, or a combination thereof, and suitable implementations will be apparent to those skilled in the art from the description herein. In particular, the control logic may be implemented by a suitably programmed processor, and the memory 11 may be an internal memory of the processor or an external memory accessible by the processor. Where the match-making logic is implemented in software, the program code may be supplied separately (as an independent element or as an element of the program code for a number of control functions) for loading in the processor to configure the processor to operate as described.

On receipt of a supplier offer from a supplier device via communications circuitry 10, the control logic stores the offer in memory 11 along with offers previously received from other suppliers. On receipt of a client requirement from a client device via communications circuitry 10, the control logic 12 initiates the process of searching for matching offers among the stored supplier offers in memory 11. In this process, supplier offers may be considered one at a time in relation to the client requirement, or multiple supplier offers may be considered in parallel, for example by considering individual parts of the client requirement in turn in relation to all supplier offers and successively eliminating supplier offers which do not match the requirements. In the following, the process of determining whether a match exists between the client requirement and a particular supplier offer will be described for simplicity, but it is to be understood that multiple supplier offers may in fact be considered in parallel.

In the match-making process, constraints specified in the client requirement are compared with the properties of the stored supplier offer to determine if the offered product features correspond to the required features as defined in the constraints. Where the supplier offer also includes constraints specifying required client features, these will also be compared with properties defining offered client features in the client requirement to determine if the constraints are met. If any properties specified by the supplier or client are dynamic properties whose values are required for assessment of a constraint, then the control logic sends an evaluation request via communication means 10 to the appropriate DPE 7 or 8 as specified in the dynamic property. The DPE then returns a current value for the property as described above, and this is received by control logic 12 and used for assessment of the constraint in question. The degree of correspondence required between constraints of one party and properties of the other party for a match to be identified may vary as discussed earlier, and the control logic can be configured to identify matching sets of constraints and properties based on the degree of correspondence required.

In addition to the basic comparison of constraints and properties, the match-making performed by the control logic also allows for structured negotiations between the parties. In particular, the feature or features on which the parties are prepared to negotiate are specified as dynamic properties in the client requirement and supplier offer respectively. For these properties, the control logic can issue multiple evaluation requests to the parties for current values of the properties, each time testing whether a negotiation success condition, dependent on the current values supplied by the parties, is satisfied. The parties can thus modify the current value specified in response to successive evaluation requests. This negotiation process continues until either the success condition is satisfied, or a negotiation termination condition is met. The termination condition will typically specify the maximum number of negotiation cycles, ie. rounds of evaluation requests to the parties, which are allowed before the negotiation is determined a failure. Assuming, however, that the negotiation success condition is satisfied before the negotiation process is terminated by the control logic 12, then provided all constraints are met in the comparison process described above, the control logic determines that a match exists between the supplier offer and client requirement. In this case, the control logic can send details of the supplier offer to the client proxy for consideration by the client, or may add the supplier offer to a list of matching offers accumulated in memory 11 for subsequent transmission to the client. At this stage, or if the client subsequently signals acceptance of a particular offer to the trader, the control logic may send the client the supplier's contact details, for example in the form of an interface to the supplier via supplier proxy 3, so that the client can then contact the supplier directly to complete the transaction.

The particular implementation of the comparison and negotiation steps of the match-making process described above can be varied in different embodiments depending on factors such as how the negotiable properties and negotiation success condition are identified in the trader device. In the following, two particular embodiments of the match-making process which may be implemented by control logic 12 in different scenarios will be described.

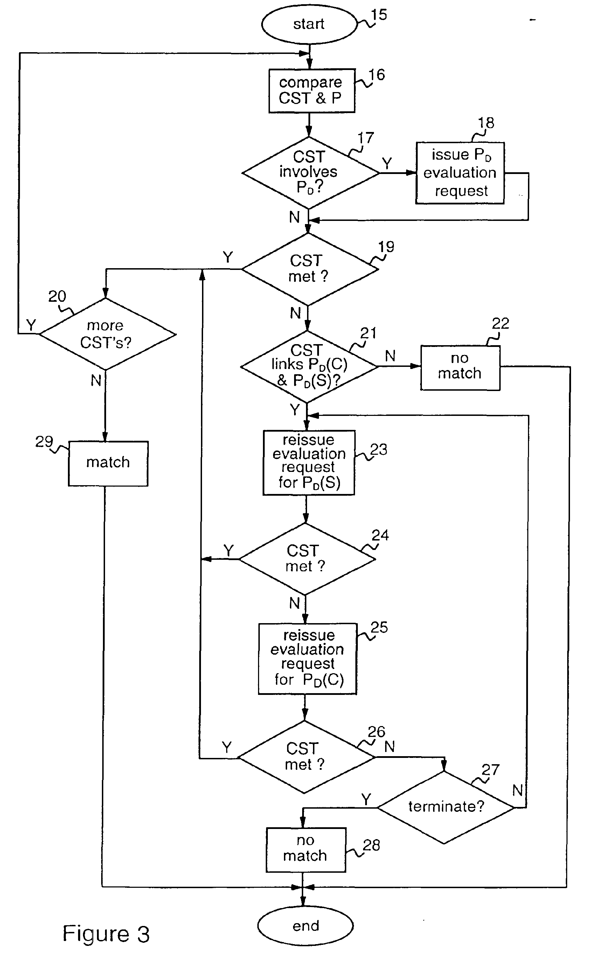

Figure 3 illustrates a simple embodiment of the match-making process where it is assumed that the negotiation success condition is defined by a constraint specified by one of the parties. Here, the negotiation process is triggered by the control logic when it identifies a constraint which links at least one dynamic property of the client requirement with at least one dynamic property of the supplier offer. This constraint is then taken as the negotiation success condition, and the dynamic properties on which the constraint is dependent are taken as the negotiable properties. In this embodiment, the termination condition is preset in the control logic as a specified number of negotiation cycles.

The process begins at step 15 when the client requirement is received by the control logic. The constraints specified in the client requirement (and those in the supplier offer under consideration where provided) are then considered in turn. Thus, in step 16 the first constraint CST is considered and compared with the property (or properties) P of the other party to which the constraint relates. Then, if it is determined in step 17 that a property P in question is a dynamic property P_{D}, in step 18 the control logic issues an evaluation request for that property to the specified DPE which returns a current value for the property as previously described. Next, in step 19, the control logic determines whether the constraint is satisfied by the relevant property value(s). Reverting to step 17, if no dynamic properties are identified here then operation can proceed directly to step 19 for evaluation of the constraint with the property value specified in the property itself.

If it is determined in step 19 that the constraint is met, operation proceeds to step 20 where the control logic checks whether there are any further constraints to consider. If so operation reverts to step 16 and proceeds as before for the next constraint CST. However, if the constraint is not satisfied at step 19, the control logic checks at step 21 whether the constraint links at least one dynamic property of the client requirement P_{D}(C) and at least one dynamic property in the supplier offer P_{D}(S). If not, then the constraint is not taken to involve negotiable properties, and, since the constraint is not satisfied, the control logic decides at step 22 that the supplier offer does not match the client requirement, and the process terminates.

Reverting to step 21, if the constraint does link client and supplier dynamic properties, then these properties are identified as negotiable properties, the constraint itself defining the negotiation success condition. The negotiation process thus commences, and in step 23 the control logic issues an evaluation request for the (or each) supplier dynamic property P_{D}(S) specified in constraint. The DPE 8 responds with the appropriate current value(s), and the constraint is again evaluated at step 24. If the constraint is determined to be met here then the negotiation has succeeded and operation reverts to step 20. If the constraint is not met at step 24, then in step 25 the control logic issues an evaluation request for the (or each) client dynamic property P_{D}(C) specified in constraint. (Note that, while in this example supplier dynamic properties are requested first, in step 23, and client dynamic properties second, in step 25, this order can of course be reversed). The DPE 7 then responds with the appropriate current value(s), and the constraint is evaluated once again at step 26. If the constraint is now met then the negotiation has been successful and operation reverts to step 20. However, if the constraint is not met at step 26, then the control logic determines in step 27 whether the negotiation termination condition is met, ie. in this case whether the specified number of negotiation cycles (steps 23 to 26 defining a negotiation cycle here) have been performed. If not, then operation reverts to step 23 and another negotiation cycle is performed. This negotiation process will continue until either the constraint representing the negotiation success condition is met at step 24 or 26, or the negotiation termination condition is met at step 27. Thus, in the negotiation process, the DPE's 7, 8 supply successive values for the negotiable properties in response to successive evaluation requests from the trader, so that each party can successively modify the specified values with a view to concluding the negotiation. As discussed earlier, the DPE's may be operative to determine the successive values automatically, for example to use values previously input by the client/supplier as appropriate or to modify an initial input value by specified increments for successive values, or the DPE's may be operative to request successive values from the client/supplier when required. If the negotiation is not successful within the maximum number of cycles allowed by the control logic, then the termination condition will be satisfied in step 27. In this case, the control logic decides at step 28 that the supplier offer does not match the client requirement, and the process terminates.

Assuming that all constraints, including the constraint defining the negotiation condition, are deemed to be satisfied in the above process, then it will eventually be determined at step 20 that there are no further constraints to consider. In this case, the control logic decides in step 29 that a match exists between the supplier offer and client requirement, and the process is complete. Details of the supplier offer can then be transmitted to the client proxy 5 for consideration by the client as discussed above.

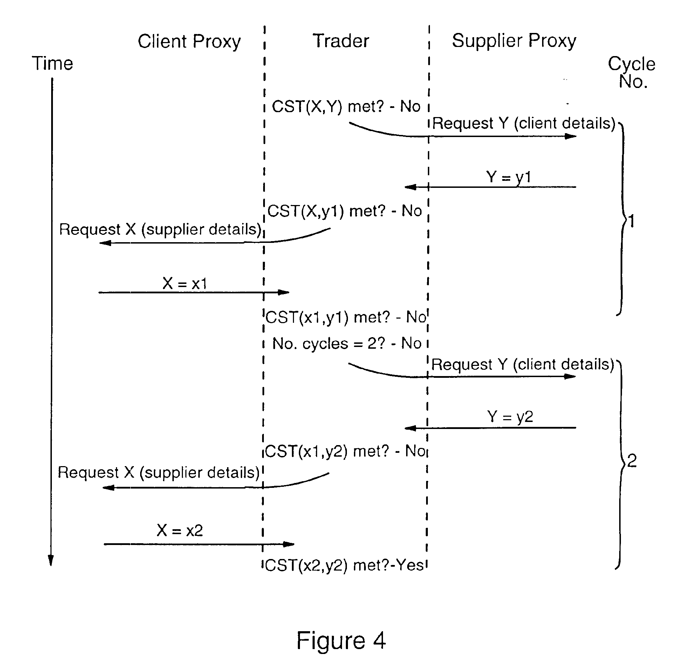

Figure 4 illustrates diagramatically the sequence of operations corresponding to the negotiation process (in particular steps 19 to 27 of Figure 3) in the above embodiment for a particular example in which the negotiation success condition is a function of a client dynamic property X and a supplier dynamic property Y, ie. CST(X,Y), and the termination condition limits the process to two negotiation cycles after the initial values of X and Y have been received from the parties (ie. at step 18 in Figure 3). In this example, use is made of a feature of dynamic properties whereby the property can specify certain information to be supplied by the trader in an evaluation request. In particular, the supplier dynamic property Y specifies that certain details about the client are required for evaluation of the property by the DPE 8. This is particularly useful where the supplier may offer different features, eg. prices, to different types of client. Provided the properties in the client offer provide the necessary client details, these details will then be included by the trader in evaluation requests for property Y sent to the DPE 8 as indicated in the figure. Similarly, in this example the client dynamic property X specifies information about the supplier required for evaluation of this property by DPE 7, and the trader includes the requested supplier details in evaluation requests for property X. In this example, the negotiation success condition CST(X, Y) is shown to be met after two negotiation cycles. If the negotiation had not been successful at this stage, the termination condition would have been met and the negotiation terminated.

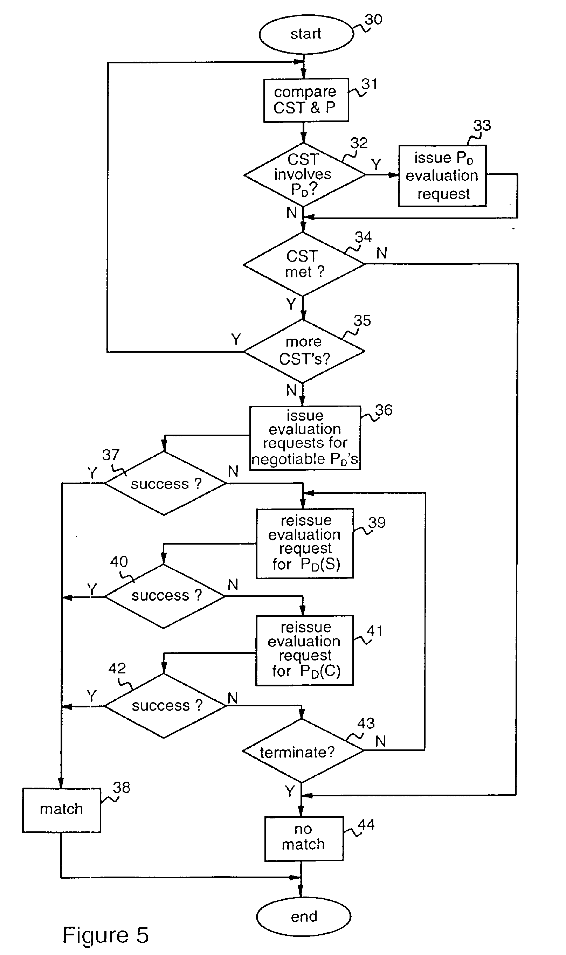

The embodiment described above illustrates a particularly simple implementation of the match-making method where the negotiation process is triggered by the control logic when a constraint linking dynamic properties of both parties is not satisfied at the first evaluation of the constraint. While this process may be appropriate in certain applications, for more complex applications it will generally be desirable for the negotiation parameters, in particular the negotiable properties and the negotiation success condition, to be identified specifically as such to the trader device and handled independently of the basic constraint evaluation. As discussed earlier, this might be achieved by inclusion of suitable identifiers in the supplier offer and client requirement, or the negotiation parameters might be predetermined in the trader device, for example by adoption of a negotiation protocol in which the parameters are defined. The use of negotiation protocols will be discussed further below, but in general where the negotiation parameters are identified as such to the trader device, the efficiency and flexibility of the match-making process can be improved. For example, the negotiation process can conveniently be deferred until all other constraints have been evaluated, so that the negotiation is only conducted if the supplier offer otherwise matches the client requirement. An embodiment of the match-making process performed by control logic 12 in this situation will now be described with reference to Figure 5.

The process begins at step 30 when the client requirement is received by the control logic. As before, the constraints specified in the client requirement and supplier offer are then considered in turn. Thus, in step 31 the first constraint CST is considered and compared with the relevant property (or properties) P of the other party. Then, if it is determined in step 32 that a property P in question is a dynamic property P_{D}, the control logic issues (step 33) an evaluation request to the specified DPE which returns a current value for the property. Next, in step 34, the control logic determines whether the constraint is met. If no dynamic properties are identified in step 32 then operation can proceed directly to step 34 for evaluation of the constraint. Either way, if the constraint is not satisfied here, then operation proceeds to step 44 where the control logic decides that the supplier offer does not match the client requirement, and the process terminates. If, however, it is determined in step 34 that the constraint is met, operation proceeds to step 35 where the control logic checks for any further constraints. If there are any further constraints to consider, operation reverts to step 31 for the next constraint CST. This loop thus continues until all constraints (or, where the negotiation success condition is specified in a constraint, all constraints other than the success condition) are deemed to be satisfied. The only further requirement for a match is then a successful negotiation, and operation thus proceeds from step 35 to step 36.

At step 36, the control logic issues evaluation requests for the dynamic properties defining negotiable features on which the negotiation success condition is dependent, and initial values for these features are returned by the DPE's 7, 8. Step 37 then tests whether the success condition is satisfied by the values supplied. (Note that, in other embodiments, provision may be made for initial, default values of the negotiable features to be specified in the dynamic properties themselves, and in such embodiments step 36 can be omitted. Also, where the dynamic properties specify that the evaluation request should include the most recent value(s) supplied by the other party as discussed further below, then the evaluation requests in step 36 may be issued sequentially to the supplier and client so that the second party can be supplied with the requested value). If the success condition is met at step 37, then the control logic determines at step 38 that a match exists between the supplier offer and client requirement, and the process terminates. Details of the supplier offer can then be transmitted to the client as described earlier. Assuming, however, that the success condition is not met at step 37, then in step in step 39 the control logic issues an evaluation request for the (or each) supplier dynamic property P_{D}(S) specified in the success condition, and the success condition is again evaluated at step 40. If the condition is met here then the negotiation has succeeded and operation proceeds to step 38. Otherwise, in step 41 the control logic issues an evaluation request for the (or each) client dynamic property P_{D}(C) specified in the success condition, and the success condition is evaluated once again at step 42. If the condition is now met then the negotiation has been successful and operation proceeds to step 38. Otherwise, the control logic determines in step 43 whether the negotiation termination condition is met, and if not, operation reverts to step 39 and another negotiation cycle is performed. The negotiation process thus continues until either the negotiation success condition is met at step 40 or 42, or the negotiation termination condition is met at step 43. In the latter case, the control logic determines at step 44 that the supplier offer does not match the client requirement, and the process terminates.

In the above method, it will be seen that the negotiation process is handled independently of the basic constraint evaluation process (comparison of constraints and properties of the other party), and the negotiation process is only triggered if the supplier offer and client requirement otherwise match. To specifically identify the negotiation parameters to the trader device allowing convenient implementation of the process in this way, it is preferred that that the trader operates in accordance with a negotiation protocol which is agreed by the parties and which defines the negotiation parameters. This is particularly useful for more complex negotiations, for example where the criterion for success is a complex function of multiple negotiable features. In some embodiments, the control logic may be dedicated to a particular negotiation protocol which is known to the parties, or the negotiation protocol may be pre-agreed between the parties in advance. For particularly flexible operation, the control logic may be operative according to a range of negotiation protocols applicable to different applications. In this case, the client and supplier can specify, for example by information in the client requirement and supplier offer respectively, the particular protocol or set of protocols offered for the negotiation process. The control logic may then compare the protocols offered by the parties, selecting a matching protocol and conducting the match-making process accordingly. The complexity of the negotiation protocol may vary for different applications, but in general a negotiation protocol may define one or more of the following.
- Negotiable features: single or multiple feature negotiations (eg. a quality and price property combination), and what the features are (eg. type, permitted range, etc.).
- Default values: whether initial default values of negotiable features are provided.
- Signature of DPE interface: defining input and output parameters of the evaluation request call (eg. the property, or for multiple properties the list of properties to be updated; property type information; information required from the trader device such as some of the other parties properties; return values expected and their type).
- Negotiation process triggering: how and when the negotiation process is triggered (eg. whether the success condition is specified in a constraint, and whether the negotiation should be conducted independently of the basic constraint evaluation).
- Negotiation success condition.
- Negotiation termination condition.
- Negotiation convergence criteria: for cases where it is useful to specify the direction in which property values should be changed in successive update cycles.
- Structure and order of the negotiation: sequential or parallel feature updates and the order of update requests.
- Exposure of position to other party: how much information can be revealed to the other party.
- Synchronous or asynchronous updates: whether the delays of involving human intervention in the feature update process can be accommodated or not.
- Mediator supervision and control: where the party providing the match-making facility provides a mediator to assume a supervisory role, what level of intervention the mediator can exercise over the policies of the client and supplier with regard to match-making and negotiations.

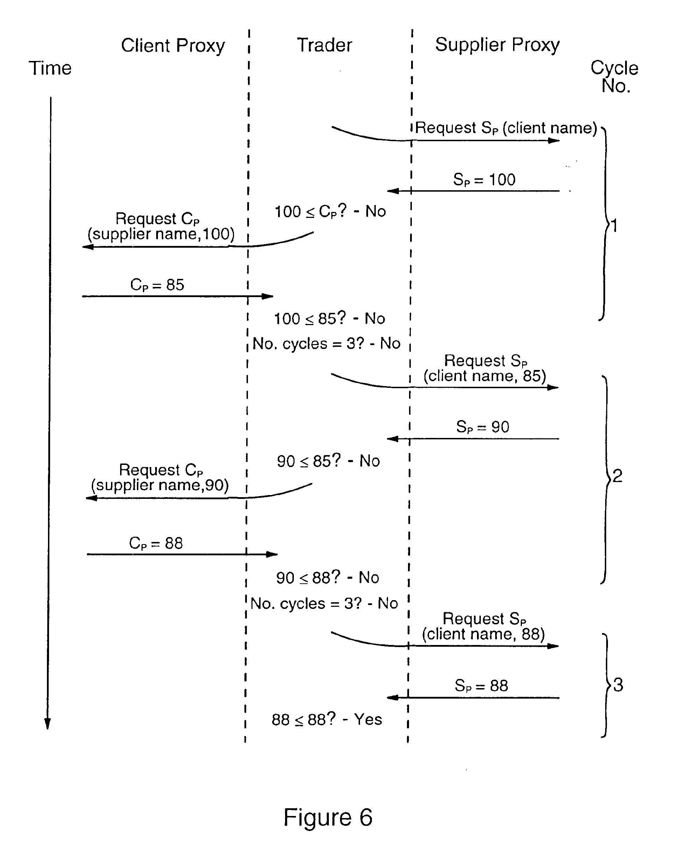

Figure 6 illustrates the sequence of operations corresponding generally to the negotiation process of Figure 5 (steps 36 to 43) for a particular example involving negotiating the price of a product in accordance with the following negotiation protocol:
- Negotiable features: Supplier offered price (S_{P}); Client required price (C_{P});
- Default values: not provided;
- Signature of DPE interface:
   - Supplier: S_{P} (client name, C_{P} value)
   - Client: C_{P} (supplier name, S_{P} value)
- Negotiation process triggering:
   - how: independently of the constraint evaluation
   - when: after the constraint evaluation
- Negotiation success condition: Supplier offered price ≤ Client required price (S_{P}≤C_{P});
- Negotiation termination condition: maximum three negotiation cycles;
- Negotiation convergence criteria: none;
- Structure and order of the negotiation: sequential and start with supplier;
- Exposure of position to other party: reveal updated value in evaluation request to other party;
- Synchronous or asynchronous updates: synchronous;
- Mediator supervision and control: none.

Thus, in this example the requests issued by the control logic for evaluation of the negotiable properties specify not only the other party's name but also the most recent current value of the negotiable property submitted by the other party. In this case therefore, step 36 of the Figure 5 method involves requesting an initial value for S_{P} from the supplier, and then requesting an initial value for C_{P} from the client, including the returned value of S_{P} in the evaluation request for C_{P}. (In the particular example illustrated in Figure 6, the control logic is configured to test the success condition after each update cycle, and thus tests the condition even after initial evaluation of S_{P} and before initial evaluation of C_{P}, though this initial test is not of course essential). As illustrated in the figure, the negotiation success condition here is satisfied in the third negotiation cycle, so the negotiation is concluded successfully before three negotiation cycles are completed, this being the maximum allowed by the termination condition.

While preferred embodiments of the invention have been described in detail above, it is to be appreciated that many changes and modifications can be made to these embodiments without departing from the scope of the invention.

## Claims

1. A method for determining, in a trader device (2) of an electronic trading system (1), whether a match exists between a client requirement, provided by a client device (5) of the system, and a supplier offer stored in said trader device (2), the supplier offer comprising feature data (P), indicative of a set of features of an offered product, including at least one updatable feature data element (P_{D}) which is indicative of a variable feature of the offered product and includes address data indicative of a location from which a current specification of the variable feature can be obtained by the trader device (2) in response to an update request from the trader device, the method comprising:
a) receiving from the client device (5) a client requirement comprising constraint data (CST), indicative of a set of required product features, and at least one updatable feature data element (P_{D}), indicative of a variable required product feature, which includes address data indicative of a location from which a current specification of the variable feature can be obtained by the trader device (2) in response to an update request from the trader device;
b) comparing the constraint data (CST) and the feature data (P);
c) repeatedly issuing update requests to obtain current specifications for said updatable feature data elements (P_{D}) of the supplier offer and the client requirement and determining whether a negotiation success condition, dependent on said current specifications, is satisfied, until said negotiation success condition or a negotiation termination condition is satisfied; and
d) determining that a match exists between the client requirement and the supplier offer if said feature data (P) corresponds to said constraint data (CST) and said negotiation success condition is satisfied.

2. A method as claimed in claim 1 wherein the supplier offer includes constraint data (CST), indicative of a set of required client features, and the client requirement includes feature data (P), indicative of a set of offered client features, and wherein:
step (b) comprises comparing the constraint data (CST) of the client requirement with the feature data (P) of the supplier offer and comparing the constraint data (CST) of the supplier offer with the feature data (P) of the client requirement; and
in step (d), it is determined that a match exists if said negotiation success condition is satisfied and the feature data (P) of the supplier offer and client requirement corresponds to the constraint data (CST) of the client requirement and supplier offer respectively.

3. A method as claimed in claim 1 or claim 2 wherein said negotiation success condition is defined by said constraint data (CST).

4. A method as claimed in any preceding claim wherein said negotiation success and termination conditions are predetermined in the trader device (2).

5. A method as claimed in any preceding claim including performing step (b) prior to performing step (c).

6. A method as claimed in any preceding claim wherein, when issuing a said update request for at least a second and subsequent current specification for said updatable feature data element (P_{D}) of one of the supplier offer and client requirement, the most recent current specification for said updatable feature data element (P_{D}) of the other of the supplier offer and client requirement is included in the update request.

7. A method as claimed in any preceding claim wherein step (c) comprises issuing respective update requests to obtain current specifications for said updatable feature data elements (P_{D}) of the supplier offer and client requirement, determining whether said negotiation success condition is satisfied, and if not:
(c1) issuing a said update request to obtain a new current specification of said at least one updatable feature data element (P_{D}) of one of the supplier offer and client requirement, determining whether the negotiation success condition is satisfied, and if not:
(c2) issuing a said update request to obtain a new current specification of said at least one updatable feature data element (P_{D}) of the other of supplier offer and client requirement, determining whether the negotiation success condition is satisfied, and if not:
(c3) repeating steps (c1) and (c2) until one of the negotiation success condition and the negotiation termination condition is satisfied.

8. A method as claimed in any preceding claim wherein at least one of the supplier offer and client requirement includes a plurality of said updatable feature data elements (P_{D}), and the negotiation success condition is dependent on the current specifications for a subset of the updatable feature data elements (P_{D}) of the supplier offer and client requirement, and wherein step (c) is performed only for the updatable feature data elements (P_{D}) of said subset.

9. A method as claimed in any preceding claim including, if it is determined in step (d) that a match exists between the supplier offer and the client requirement, transmitting data indicative of the supplier offer to the client device (5).

10. A trader device (2) of an electronic trading system (1) for determining whether a match exists between a client requirement, provided by a client device (5) of the system, and a supplier offer stored in the trader device (2), the supplier offer comprising feature data (P), indicative of a set of features of an offered product, including at least one updatable feature data element (P_{D}) which is indicative of a variable feature of the offered product and includes address data indicative of a location from which a current specification of the variable feature can be obtained by the trader device (2) in response to an update request from the trader device, the trader device (2) comprising memory (11) for storing the supplier offer, communication means (10) for transmission and reception of data by the trader device (2), and control logic (12), responsive to receipt by the trader device of a client requirement which comprises constraint data (CST), indicative of a set of required product features, and at least one updatable feature data element (P_{D}), indicative of a variable required product feature, which includes address data indicative of a location from which a current specification of the variable feature can be obtained by the trader device in response to an update request from the trader device, to:
compare said constraint data (CST) and said feature data (P); and
repeatedly issue update requests via said communication means (10) to obtain current specifications for said updatable feature data elements (P_{D}) of the supplier offer and the client requirement and determine whether a negotiation success condition, dependent on said current specifications, is satisfied, until said negotiation success condition or a negotiation termination condition is satisfied;
wherein the control logic (12) is configured to determine that a match exists between the client requirement and the supplier offer if said feature data (P) corresponds to said constraint data (CST) and said negotiation success condition is satisfied.

11. A device as claimed in claim 10 wherein the supplier offer includes constraint data (CST), indicative of a set of required client features, and the client requirement includes feature data (P), indicative of a set of offered client features, and wherein the control logic (12) is configured:
to compare the constraint data (CST) of the client requirement with the feature data (P) of the supplier offer and compare the constraint data (CST) of the supplier offer with the feature data (P) of the client requirement; and
to determine that said match exists if said negotiation success condition is satisfied and the feature data (P) of the supplier offer and client requirement corresponds to the constraint data (CST) of the client requirement and supplier offer respectively.

12. An electronic trading system (1) comprising:
a trader device (2) as claimed in claim 10 or claim 11;
a supplier device (3) for transmitting a supplier offer to the trader device (2), the supplier offer comprising feature data (P), indicative of a set of features of an offered product, including at least one updatable feature data element (P_{D}) which is indicative of a variable feature of the offered product and includes address data indicative of a location from which a current specification of the variable feature can be obtained by the trader device in response to an update request from the trader device;
supplier feature update means (8), responsive to an update request issued by the trader device (2) to the location indicated by said updatable feature data element (P_{D}) of the supplier offer, to supply a current specification for the feature data element to the trader device (2);
a client device (5) for transmitting a client requirement to the trader device (2), the client requirement comprising constraint data (CST), indicative of a set of required product features, and at least one updatable feature data element (P_{D}), indicative of a variable required product feature, which includes address data indicative of a location from which a current specification of the variable feature can be obtained by the trader device in response to an update request from the trader device, and
client feature update means (7), responsive to an update request issued by the trader device (2) to the location indicated by said updatable feature data element (P_{D}) of the client requirement, to supply a current specification for the feature data element to the trader device (2).

13. A system as claimed in claim 12 wherein the supplier device (3) includes said supplier feature update means (8).

14. A system as claimed in claim 12 or claim 13 wherein the client device (5) includes said client feature update means (7).

15. A computer program element comprising computer program code means which, when loaded in a processor of a trading device (2) of an electronic trading system (1), configures the processor to perform a method as claimed in any one of claims 1 to 9.
